# EUROPEAN PATENT SPECIFICATION

(11) **EP 3 342 017 B1**
(45) Date of publication and mention of the grant of the patent: **12.02.2020**
(21) Application number: 16760826.4
(22) Date of filing: 26.08.2016
(51) Int. Cl.: H02H 7/26, H02J 3/00, H02H 3/06

(54) **DC SWITCH YARD AND METHOD TO OPERATE SUCH A DC SWITCH YARD**
GLEICHSTROMSCHALTANLAGE UND VERFAHREN ZUM BETRIEB SOLCH EINER GLEICHSTROMSCHALTANLAGE
POSTE ÉLECTRIQUE EXTÉRIEUR À COURANT CONTINU ET PROCÉDÉ DE FONCTIONNEMENT D'UN TEL POSTE ÉLECTRIQUE EXTÉRIEUR À COURANT CONTINU

(30) Priority: 27.08.2015 NL 2015357
(43) Date of publication of application: 04.07.2018
(73) Proprietor: Technische Universiteit Delft, 2628 CD Delft (NL)
(72) Inventor: MACKAY, Laurens Johannes, 2600 AA Delft (NL); KONTOS, Epameinondas, 2600 AA Delft (NL)
(74) Representative: Van Breda, Jacobus
(86) International application number: PCT/NL2016/050594
(87) International publication number: WO 2017/034408

(56) References cited:
- WO-A1-2012/136241
- US-A1- 2005 213 288
- US-A1- 2013 050 888

## Description

The invention relates to a DC switch yard comprising at least two busbars and two or more DC lines forming a grid, wherein each DC line is connected or connectable to said at least two busbars through an intermediate circuit breaker. The invention also relates to a method to operate such a DC switch yard. The DC switch yard may be high-voltage, medium voltage or low-voltage.

WO2013/068046 discloses a high-voltage switch yard for interconnecting at least three sections of a direct current power distribution network or grid, wherein the switch yard comprises at least one main circuit breaker, and at least four transfer switches which are arranged to enable anyone of the at least three sections of the DC power grid to be disconnected from each other. The circuitry proposed in this publication is aimed at reducing the number of main breakers in the switch yard, to realize notable cost advantages by arranging that a single main breaker may be used for connecting and disconnecting each of the respective sections to or from the remainder of the grid.

US 2005/0213288 teaches a high voltage outdoor substation with two outdoor busbars as well as several switch bays which may be connected to the busbars by the provision of an encapsulated gas insulated arrangement of switchgear modules in the switch bays.

US2013/0050888 discloses a high-voltage DC switch yard comprising at least one busbar, at least two DC lines connected to the at least one busbar through DC breakers comprising a section of at least one semiconductor device of turnoff type in a rectifying member connected in antiparallel therewith. At least one of said DC lines is connected to said at least one busbar through a unidirectional DC breaker, i.e. a DC breaker that may only block current therethrough in one direction.

WO2012/136241 teaches a fault protection device for a high-voltage direct current double breaker busbar unit. The busbar unit comprises a first busbar, a second busbar, and at least three switchgear bays, wherein each switchgear bay comprises a pair of direct current circuit breakers being arranged for connecting a DC circuit to the busbars.

The instant invention is aimed at improving the known DC switch yard and open the way to further cost savings.

The DC switch yard of the invention is provided with the features of one or more of the appended claims.

In a first aspect of the invention the DC switch yard has at least two busbars that are interconnected or connectable to each other through an intermediate main circuit breaker, wherein each of said two or more DC lines are connected or connectable to each of said at least two busbars through intermediate fast disconnectors, and wherein the main circuit breaker is arranged with unidirectional breaking capacity, resulting into notable cost savings.

Arranging that the main circuit breaker is equipped with merely unidirectional breaking capacity is particularly possible by operating the DC switch yard of the invention such that upon identification of a DC line to be disconnected from the grid, one of the fast disconnectors of said DC line is operated to disconnect said DC line from a first one of the two busbars (which can be labeled the healthy busbar), and operating the disconnectors of the remaining DC lines to disconnect said remaining DC lines from a second of the two busbars (which can be labeled the fault busbar), whereafter the main circuit breaker can be operated to disconnect the two busbars from each other. This sequence of first disconnecting the DC line to be disconnected from the healthy busbar and then disconnecting the remaining DC lines from the fault busbar ensures that current will always flow in the same direction from the healthy busbar to the fault busbar through the main circuit breaker connecting the two busbars. Consequently the main circuit breaker only needs components that enable it to operate with unidirectional breaking capacity. Accordingly in comparison with the prior art the main circuit breaker to be used according to the invention can be provided at about half the costs.

Further cost savings are possible by also arranging that the fast disconnectors are enabled to operate with unidirectional breaking capacity.

Desirably the operation of the switch yard proceeds such that after the two busbars are disconnected from each other, the fast disconnector connecting the DC line which was to be disconnected from the grid and which is still connected to the second of the two busbars (i.e. to the fault busbar) is operated to disconnect said DC line also from this second of the two busbars. Then the DC line is completely separated and can be subjected to maintenance, inspection or other operations.

Preferably then, after the DC line which was to be disconnected from the grid is disconnected from the two busbars, the main circuit breaker is operated to restore the connection between the two busbars. Also the fast disconnectors of the remaining DC lines are closed again to reconnect said remaining DC lines to the second of the two busbars. The switch yard is then ready again for further operation to connect or disconnect other DC lines to or from the grid.

The invention will hereinafter be further elucidated with reference to the drawing of an exemplary embodiment of a DC switch yard according to the invention that is not limiting as to the appended claims.

In the drawing:
- figure 1 shows a DC switch yard according to the invention;
- figures 2, 3 and 4 show examples of possible main circuit breakers; and
- figure 5, 6, 7 show examples of possible fast disconnectors.

Whenever in the figures the same reference numerals are applied, these numerals refer to the same parts.

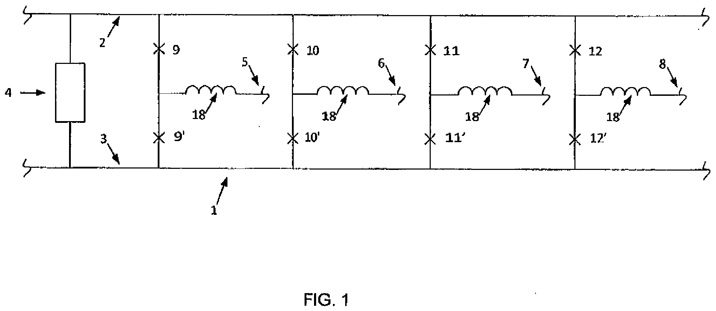

With reference first to figure 1 the DC switch yard 1 of the invention is shown, comprising at least two busbars 2, 3 that are interconnected or connectable to each other through an intermediate main circuit breaker 4. Connected or connectable to each of the busbars 2, 3 are one or more DC lines 5 - 8, altogether forming a grid. Each DC line 5 - 8 is connected or connectable to each of said at least two busbars 2, 3 through intermediate fast disconnectors 9, 9'; 10, 10'; 11, 11'; 12, 12'. The switch yard 1 of the invention is preferably operated such that when for instance DC line 6 is to be disconnected from the grid, one disconnector 10 of the fast disconnectors 10, 10' of said DC line 6 is operated to disconnect said DC line 6 from a first busbar 2 of the two busbars 2, 3, which can be labeled the healthy busbar. The disconnectors 9', 11', 12' of the remaining DC lines 5, 7, 8 are thereafter operated to disconnect said remaining DC lines 5, 7, 8 from a second busbar 3 of the two busbars 2, 3, which can be labeled the fault busbar. Thereafter the main circuit breaker 4 can be operated to electrically disconnect the two busbars 2, 3 from each other so as to interrupt electrical current between the two busbars. It is of course evident that the function of the healthy busbar 2 and the fault busbar 3 can be interchanged based on the polarity of the dc lines. Accordingly the main claim does not differentiate between the at least two busbars 2, 3.

After the two busbars 2, 3 are thus disconnected from each other, the fast disconnector 10' still connecting DC line 6 - which was to be disconnected from the grid - to the second or fault busbar 3 of the two busbars 2, 3 is operated to disconnect said DC line 6 also from this second, fault busbar 3 of the two busbars 2, 3. After the DC line 6 to be disconnected from the grid is thus disconnected from both two busbars 2, 3, the main circuit breaker 4 can be operated to restore the connection between the two busbars 2, 3. Also the disconnectors 9', 11' and 12' of the remaining DC lines are operated to reconnect said remaining DC lines to the second of both busbars 2, 3 The DC switch yard 1 of the invention is then ready for further disconnecting DC lines from the grid.

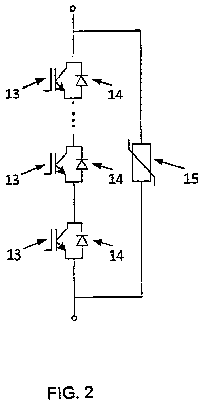

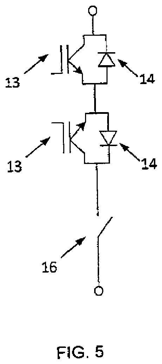

The main circuit breaker 4 to be employed in the DC switch yard 1 of the invention and/or the fast disconnectors 9, 9'; 10, 10'; 11, 11'; 12, 12' to be employed therein can be arranged for breaking of unidirectional current. Examples of main circuit breakers and fast disconnectors which can be employed in the invention are provided in the attached figures 2 - 4 (main circuit breakers) and figures 5 - 7 (fast disconnectors) respectively.

It is remarked that in figure 1 inductors 18 are shown which may be required to limit the rate of change of the currents through the DC lines. They may be obsolete if the main breaker 4 is able to break very high currents or if the currents do not change rapidly.

Figure 2 shows in series insulated gate bipolar transistors 13 with individual antiparallel diodes 14 and a common varistor 15.

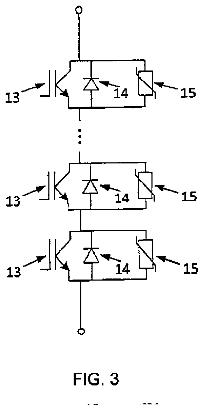

Figure 3 shows in series insulated gate bipolar transistors 13 with individual antiparallel diodes 14 and individual varistors 15.

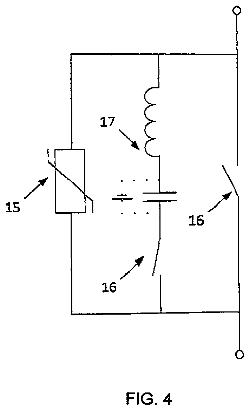

Figure 4 shows the circuit of an active resonance breaker with switches 16, an LC circuit 17 and a varistor 15.

It is to be understood that figures 2 - 4 are not limiting and that other types of main circuit breakers are possible to be applied within the scope of the invention. The same applies to the nonlimiting examples of figures 5 - 7 showing examples of fast disconnectors which can be employed within the scope of the invention.

Figure 5 shows a fast disconnector with bidirectional switching capacity and two insulated gate bipolar transistors 13 with individual antiparallel diodes 14 that are placed in series with a fast mechanical switch 16.

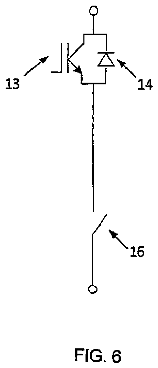

Figure 6 shows a unidirectional fast disconnector with a single insulated gate bipolar transistor 13 provided with an antiparallel diode 14 that are placed in series with a fast mechanical switch 16.

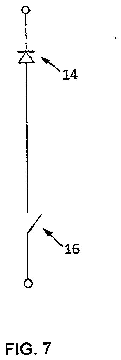

Finally figure 7 shows in series a diode 14 with a fast mechanical switch 16.

Although the invention has been discussed in the foregoing with reference to an exemplary embodiment of the DC switch yard of the invention, the invention is not restricted to this particular embodiment which can be varied in many ways without departing from the invention. The discussed exemplary embodiment shall therefore not be used to construe the appended claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. DC switch yard (1) comprising at least two busbars (2, 3) and two or more DC lines (5 - 8) forming a grid, wherein each DC line (5 - 8) is connected or connectable to said at least two busbars (2, 3), wherein the at least two busbars (2, 3) are interconnected or connectable to each other through an intermediate main circuit breaker (4), and wherein each of said two or more DC lines (5 - 8) are connected or connectable to each of said at least two busbars (2, 3) through intermediate fast disconnectors (9, 9'; 10, 10'; 11, 11'; 12, 12'), **characterized in that** the main circuit breaker (4) is arranged with unidirectional breaking capability.

2. DC switch yard according to claim 1, **characterized in that** the fast disconnectors (9, 9'; 10, 10'; 11, 11'; 12, 12') are arranged with unidirectional breaking capability.

3. Method of operating a DC switch yard (1) according to claim 1 or 2, **characterized in that**
upon identification of a DC line to be disconnected from the grid, one of the fast disconnectors of said DC line is operated to disconnect said DC line from a first of the at least two busbars (2, 3), and disconnectors of the remaining DC lines are operated to disconnect said remaining DC lines from a second of the at least two busbars (2, 3), whereafter the main circuit breaker (4) is operated to disconnect the two busbars (2, 3) from each other.

4. Method according to claim 3, **characterized in that** after the at least two busbars (2, 3) are disconnected from each other the fast disconnector connecting the DC line to be disconnected from the grid to the second of the at least two busbars is operated to disconnect said DC line also from this second of the two busbars (2, 3).

5. Method according to claim 4, **characterized in that** after the DC line to be disconnected from the grid is disconnected from the at least two busbars (2, 3), the main circuit breaker (4) is operated to restore the connection between the at least two busbars (2, 3).

6. Method according to claim 4 or 5, **characterized in that** after the DC line to be disconnected from the grid is disconnected from the at least two busbars (2, 3), the disconnectors of the remaining DC lines are operated to reconnect said remaining DC lines to the second of the at least two busbars (2, 3).

## Patentansprüche

1. Gleichstromschaltanlage (1), umfassend wenigstens zwei Sammelschienen (2, 3) und zwei oder mehrere Gleichstromleitungen (5 bis 8), die ein Netz bilden, wobei jede Gleichstromleitung (5 bis 8) mit den wenigstens zwei Sammelschienen (2, 3) verbunden ist oder verbindbar ist,
wobei die wenigstens zwei Sammelschienen (2, 3) über einen Zwischen-Hauptstromkreisunterbrecher (4) miteinander verbunden sind oder verbindbar sind, und wobei jede der zwei oder mehreren Gleichstromleitungen (5 bis 8) mit jeder der wenigstens zwei Sammelschienen (2, 3) über Zwischen-Schnelltrennschalter (9, 9'; 10, 10'; 11, 11'; 12, 12') verbunden ist oder verbindbar ist, **dadurch gekennzeichnet, dass** der Hauptstromkreisunterbrecher (4) mit unidirektionaler Unterbrechungsfähigkeit angeordnet ist.

2. Gleichstromschaltanlage nach Anspruch 1, **dadurch gekennzeichnet, dass** die Schnelltrennschalter (9, 9'; 10, 10'; 11, 11'; 12, 12') mit unidirektionaler Unterbrechungsfähigkeit angeordnet sind.

3. Verfahren zum Betreiben einer Gleichstromschaltanlage (1) nach Anspruch 1 oder 2, **dadurch gekennzeichnet, dass**
bei Identifizierung einer vom Netz zu trennenden Gleichstromleitung einer der Schnelltrennschalter der Gleichstromleitung betätigt wird, um die Gleichstromleitung von einer ersten der wenigstens zwei Sammelschienen (2, 3) zu trennen, wobei Trennschalter der verbleibenden Gleichstromleitungen betätigt werden, um die verbleibenden Gleichstromleitungen von einer zweiten der wenigstens zwei Sammelschienen (2, 3) zu trennen, wonach der Hauptstromkreisunterbrecher (4) betätigt wird, um die zwei Sammelschienen (2, 3) voneinander zu trennen.

4. Verfahren nach Anspruch 3, **dadurch gekennzeichnet, dass**, nachdem die wenigstens zwei Sammelschienen (2, 3) voneinander getrennt sind, der Schnelltrennschalter, der die vom Netz zu trennende Gleichstromleitung mit der zweiten der wenigstens zwei Sammelschienen verbindet, betätigt wird, um die Gleichstromleitung auch von dieser zweiten der zwei Sammelschienen (2, 3) zu trennen.

5. Verfahren nach Anspruch 4, **dadurch gekennzeichnet, dass**, nachdem die vom Netz zu trennende Gleichstromleitung von den wenigstens zwei Sammelschienen (2, 3) getrennt ist, der Hauptstromkreisunterbrecher (4) betätigt wird, um die Verbindung zwischen den wenigstens zwei Sammelschienen (2, 3) wiederherzustellen.

6. Verfahren nach Anspruch 4 oder 5, **dadurch gekennzeichnet, dass**, nachdem die vom Netz zu trennende Gleichstromleitung von den wenigstens zwei Sammelschienen (2, 3) getrennt ist, die Trennschalter der verbleibenden Gleichstromleitungen betätigt werden, um die verbleibenden Gleichstromleitungen wieder mit der zweiten der wenigstens zwei Sammelschienen (2, 3) zu verbinden.

## Revendications

1. Poste de commutation extérieur (1) à courant continu, CC, comprenant au moins deux barres omnibus (2, 3) et deux ou plus de deux lignes CC (5 à 8) formant un réseau, dans lequel chaque ligne CC (5 à 8) est connectée ou apte à être connectée auxdites au moins deux barres omnibus (2, 3), dans lequel lesdites au moins deux barres omnibus (2, 3) sont interconnectées ou aptes à être connectées l'une à l'autre par l'intermédiaire d'un disjoncteur principal (4) intermédiaire, et dans lequel chacune desdites deux ou plus de deux lignes CC (5 à 8) sont connectées ou aptes à être connectées à chacune desdites au moins deux barres omnibus (2, 3) par l'intermédiaire de sectionneurs rapides intermédiaires (9, 9' ; 10, 10' ; 11, 11' ; 12, 12'), **caractérisé en ce que** le disjoncteur principal (4) est muni d'une capacité de coupure unidirectionnelle.

2. Poste de commutation extérieur CC selon la revendication 1, **caractérisé en ce que** les sectionneurs rapides (9, 9' ; 10, 10' ; 11, 11' ; 12, 12') sont munis d'une capacité de coupure unidirectionnelle.

3. Procédé de fonctionnement d'un poste de commutation extérieur (1) CC selon la revendication 1 ou 2, **caractérisé en ce que**
lors de l'identification d'une ligne CC à déconnecter du réseau, l'un des sectionneurs rapides de ladite ligne CC est actionné pour déconnecter ladite ligne CC d'une première desdites au moins deux barres omnibus (2, 3), et des sectionneurs des lignes CC restantes sont actionnés pour déconnecter lesdites lignes CC restantes d'une seconde desdites au moins deux barres omnibus (2, 3), après quoi le disjoncteur principal (4) est actionné pour déconnecter les deux barres omnibus (2, 3) l'une de l'autre.

4. Procédé selon la revendication 3, **caractérisé en ce qu'**après que lesdites au moins deux barres omnibus (2, 3) sont déconnectées l'une de l'autre, le sectionneur rapide connectant la ligne CC à déconnecter du réseau à la seconde desdites au moins deux barres omnibus est actionné pour déconnecter ladite ligne CC également de cette seconde barre desdites deux barres omnibus (2, 3).

5. Procédé selon la revendication 4, **caractérisé en ce qu'**après que la ligne CC à déconnecter du réseau est déconnectée desdites au moins deux barres omnibus (2, 3), le disjoncteur principal (4) est actionné pour rétablir la connexion entre lesdites au moins deux barres omnibus (2, 3).

6. Procédé selon la revendication 4 ou 5, **caractérisé en ce qu'**après que la ligne CC à déconnecter du réseau est déconnectée desdites au moins deux barres omnibus (2, 3), les sectionneurs des lignes CC restantes sont actionnés pour reconnecter lesdites lignes CC restantes à la seconde desdites au moins deux barres omnibus (2, 3).
